# EUROPEAN PATENT SPECIFICATION

(11) **EP 1 563 699 B1**
(45) Date of publication and mention of the grant of the patent: **02.01.2008**
(21) Application number: 03772861.5
(22) Date of filing: 18.11.2003
(51) Int. Cl.: H04Q 7/26

(54) **SEAMLESS ROAMING BETWEEN LAN ACCESS POINTS**
NAHTLOSES ROAMING ZWISCHEN LAN-ZUGANGSPUNKTEN
ITINERANCE SANS COUPURE ENTRE DES POINTS D'ACCES DE RESEAU SANS FIL

(30) Priority: 18.11.2002 US 299312
(43) Date of publication of application: 17.08.2005
(73) Proprietor: Toshiba Carrier Corporation, Tokyo 105-8001 (JP)
(72) Inventor: WOJACZYNSKI, David, Toshiba America Research, Inc., Morristown, NJ 07960 (US); MCCLOSKEY, Andrew, Toshiba America Research, Inc., Morristown, NJ 07960 (US); SWONK, Glenn, Toshiba America Research, Inc., Morristown, NJ 07960 (US); ASTARABADI, Shaun, Toshiba America Research, Inc., Morristown, NJ 07960 (US); BABA, Shinichi, OZENJI NISHI 6-2-2-301, Kanagawa 215-0017 (JP)
(74) Representative: Midgley, Jonathan Lee
(86) International application number: PCT/JP2003/014657
(87) International publication number: WO 2004/047469

(56) References cited:
- WO-A-01/60085
- US-A1- 2002 010 683
- US-A1- 2002 035 699
- US-A1- 2002 085 516

## Description

### Technical Field

Embodiments of the present invention relates to wireless network communication systems. More particularly, embodiments of the present invention relate to wireless network communication systems that support secured seamless roaming of real-time voice and data communications sessions utilizing portable wireless electronic devices.

### Background Art

Not long ago, discrete technologies had discrete purposes. Telephones made calls, office-bound computers accessed databases, and personal digital assistants (PDAs) were simple scheduling devices. But the changing, and increasingly mobile, needs of business dictated a new strategy: convergence of business communications technologies into a flexible array of services that can be accessed through the enterprise and beyond, by almost any device.

Therefore, mobile computing has become more prevalent. In recent years, there has been an increase in the deployment of notebook personal computers (notebook PCs) and PDAs. This deployment is a result of the of the increasing need for users to be productive in places other than in the office or behind the desk. Companies are requiring more work to be accomplished with less people. Productivity increases are a key metric for wireless return on investment (ROI). Virtual private networks (VPNs) and wired and wireless modems permit secured access to corporate data outside of the office. And, deployments of wireless local are networks (W-LANs) are also increasing in schools and corporate campuses.

Public W-LANs are emerging as a viable alternative to circuit-switched or packet-switched cellular data connections. Moreover, the convergence of voice and data on the LAN is rapidly occurring. Several companies are pushing toward the widespread adoption of Internet Protocol (IP) telephony. Many intra-offices and intra-enterprises are now migrating from traditional circuit-switched solutions to traffic that are transported and switched as packets or cells. Moreover, the standards governing Voice over IP (VoIP), such as H.323, Session Initiation Protocol (SIP), Power over Ethernet (or Power over LAN), for example, are being finalized and established, which further promotes acceptance and adoption of packet-based communications.

Personal computers (PCs), PDAs, and other devices are managing more voice and multimedia communications. More telephones are connected to data networks, or LANs, so that in addition to making calls, they can access directories, messaging, and other database information. Whether in and around the office or campus, at home, or somewhere in between, being connected to these voice, data, and other multimedia resources is critical to meeting the new business demands for productivity and responsiveness.

WO 01/60085 relates to a system for providing user mobility between public and private wireless networks using a wireless adjunct Internet platform (WARP).

US 2002/0035699 relates to a method and system for roaming in a wireless local area network (WLAN) using a gateway server.

Accordingly, it is desirable to have a wireless communications system capable of interacting with a voice network, such as a private branch exchange (PBX), and a data network, such as a LAN or Internet, to provide users with secured seamless mobile access to the same resources they would otherwise have at their desks while roaming throughout a community, such as an office or school campus.

In a first aspect, the present invention provides a mobility communications system according to claim 1. In a second aspect, the present invention provides a method of wireless communication according to claim 32. In a third aspect, the present invention provides a program code storage device according to claim 38.

### Brief Description of Drawings

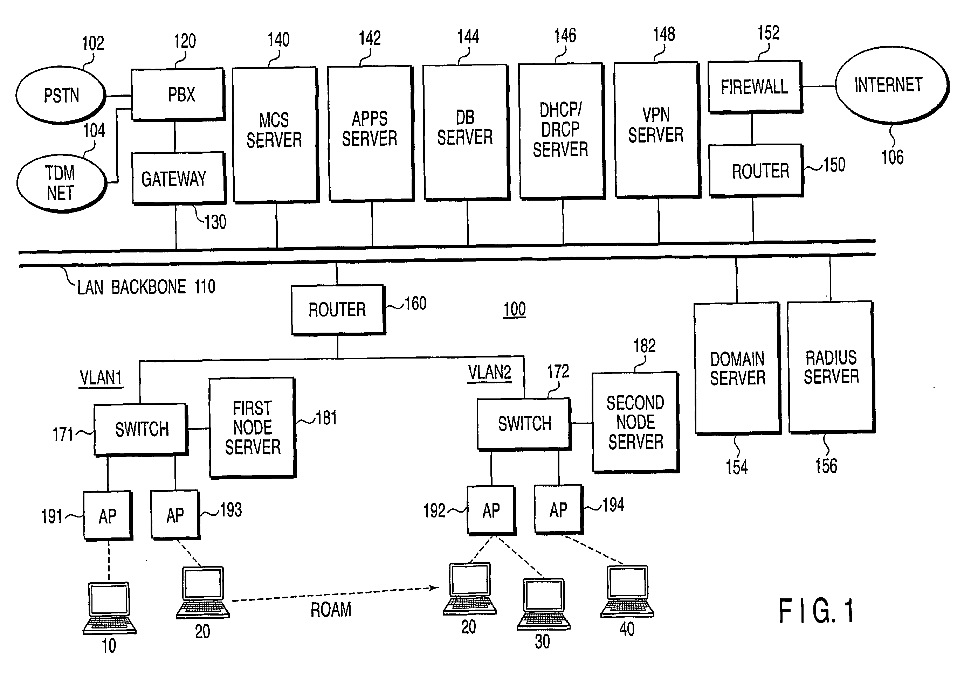

Fig. 1 illustrates a mobility communications system according to an embodiment of the present invention.

### Detailed Description of Invention

Fig. 1 illustrates a mobility communications system according to an embodiment of the present invention. A local area network (LAN) backbone 110 provides connectivity between the various components of the mobility communications system 100. At the heart of the mobility communications system 100 is the mobility communications system (MCS) server 140, which provides main control over the entire system 100.

A private branch exchange (PBX) system 120, such as the Toshiba^{™} Strate-CTX system, is connected to a public switched telephone network 102. The PBX system 120 may also have a connection with a time division multiplexing (TDM) network 104 (also known as digital leased lines). A gateway 130, such as a Cisco^{™} 2600 intelligent media gateway, interconnects the PBX system 120 and the LAN backbone 110. The gateway 130 is a liaison to permit communications between two protocols, for example, between the PBX protocol and the Internet Protocol (IP).

The mobility communications system 100 is connected to a wide area network (WAN), such as the Internet 106, via a router 150 and a firewall 152. A virtual private network (VPN) server 148 may be included in the mobility communications system 100 to provide security and encryption/decryption capabilities to the system 100 utilizing, for example, the IP Security (IP Sec) protocol. A remote authentication dial-in user service (RADIUS) server 156 may be included in the mobility communications system 100 to provide authentication and accounting of users of type system 100. Other authentication protocols and server systems may be implemented as well, and integration with other authentication protocols, such as the Diameter protocol for example, may be implemented. Furthermore, a domain server 154 may be included in the mobility communications system 100 to facilitate access to and from the WAN, such as the Internet 106.

An applications server 142 may be included in the mobility communications system 100 to store and provide applications to the system 100. A database 144 may also be included in the mobility communications system 100 to provide database storage and functionality to the system 100. A dynamic host configuration protocol (DHCP) and/or a dynamic rapid configuration protocol (DRCP) server 146 is connected to the LAN backbone 110 to assign IP addresses to the nodes of the network.

A plurality of wireless electronic devices 10, 20, 30, 40 communicate wirelessly with the mobility communication system 100 via wireless protocol. The wireless electronic devices 10, 20, 30, 40 communicate wirelessly with access points 191, 192, 193, 194, which are preferably radio frequency (RF) transceivers, for example, and which are in communication with a node server 181, 182 via a switch 171, 172. The switch 171, 172 may be connected to a router 160, which is connected to the LAN backbone 110. The switch 171, first node server 181, access points 191, 193, and wireless electronic devices 10, 20, (before roaming) form a first sub-network, or virtual local area network (VLAN 1). The switch 172, second node server 182, access points 192, 194, and wireless electronic devices 20 (after roaming), 30, 40 form a second sub-network, or virtual local area network (VLAN 2).

Each wireless electronic device 10, 20, 30, 40 is authenticated, accounted, and authorized by the MCS server 140, which relays this information (e.g., via certificates) to the first node server 181 and the second node server 182. Accordingly, when a wireless electronic device 20 moves/roams from one sub-network to another, the wireless electronic device 20 need only communicate and re-authenticate with the corresponding first node server 181 or second node server 182, and the communication path need not go back to the MCS server 140 across the LAN backbone 110. The Protocol for carrying Authentication for Network Access (PANA), may be utilized to provide authentication, accounting, and authorization (AAA) to authenticate clients (i.e., wireless electronic devices) when they roam. PANA is a Layer 3 network authentication protocol that supports secure authentication over wireless connections. PANA supports seamless roaming between sub-networks and between W-LAN and cellular packet-based networks as well.

The wireless electronic device 20, for example, establishes a wireless connection with an access point 193 in the first sub-network. Accordingly, the wireless electronic device 20 is provided with access to the mobility communications system 100 network and all its resources, including access to the Internet 106 and the PBX system 120. According to an embodiment of the present invention, the wireless electronic device 20 is adapted to function as a wireless telephone having a telephone address or number (or a PBX extension number). The wireless electronic device 20 is capable of accessing all of the PBX functionality of the PBX system 120 as if it was a hardwired telephone, including voice mail, conference calling, call waiting, call forwarding/transferring, directory look-up, etc. Moreover, the wireless electronic device 20 may also be adapted to function like a desktop computer connected to the corporate LAN, including access to the Internet 106, and available software applications.

According to an embodiment of the present invention, the wireless electronic devices 10, 20, 30, 40 utilize the Session Initiation Protocol-Mobile (SIP-M) for voice communications (packet-based), and utilize the Mobile Internet Protocol (Mobile IP) for data communications. Integration of both the SIP-M and Mobile IP protocols provide greater flexibility to the roaming capabilities of the wireless electronic device 10, 20, 30, 40. Mobile IP is an Internet Engineering Task Force (IETF) standard protocol that runs on the network layer. Mobile IP permits a wireless PC, wireless PDA, or other mobile node to move from one network link to another without interrupting communications. In an organization with W-LAN, a wireless notebook PC may be physically moved from one building to another, into a new sub-network, without interrupting a file download or vide stream, and without requiring the user to renew their network/IP address. SIP-M is an IETF standard protocol for IP communication that initiates information-transfer sessions between applications. Unlike the traditional telecommunications model that operates via a central switching element, SIP-M allows the control of services, like telephony, to be moved to the endpoints of a network in SIP-based PDA, notebook PC, Tablet PC clients or SIP-based mobile phones. SIP-M is flexible and extensible, and supports many different types of applications, including video, telephony, messaging or instant messaging, and collaboration. However, any other suitable protocol or protocols may be utilized, though, for voice communication, data communication, or both.

A network address is assigned to the wireless electronic device 20 once a wireless connection is established with the access point 193. If the wireless electronic device 20 should roam within the first sub-network to another access point 191, its network address does not change, but the wireless connection is simply disconnected from one access point 193 and re-established with the other access point 191. Various quality of service (QoS) protocols or business rules may be implemented to determine with which access point a wireless electronic device should establish a wireless connection. For example, signal strength and available bandwidth may be factors in the consideration when a wireless electronic device is choosing from among a plurality of access points of which it is within range. In one instance, it may be more preferable to establish a wireless connection with an access point having a poorer signal strength but has a greater availability of bandwidth than compared to an access point having a stronger signal but has 29 other users already connected.

When the wireless electronic device 20 roams out of range from the access points 191, 193 of a first sub-network and into a second sub-network, the wireless connection with the access point 193 of the first sub-network is automatically disconnected, and seamlessly re-established with a second access point 192 of the second sub-network. In an embodiment utilizing SIP-M for roaming, because the wireless electronic device 20 moved from one sub-network to another, a new network address is assigned to the wireless electronic device 20. In an embodiment utilizing Mobile IP for roaming, when the wireless electronic device 20 moves from one subnet to another, a new network address is assigned to the wireless electronic device.

The MCS server 140 manages a table of network addresses corresponding to, for example, telephone numbers/addresses (e.g., a PBX extension number) of each wireless electronic device 10, 20, 30, 40 on type system 100. The table (e.g., see Table 1 below) may also include an alias, or uniform resource locator (URL) address, e.g., joe.doe@toshiba.com, corresponding to a telephone number or address of a wireless electronic device 10, 20, 30, 40. When the wireless electronic device 20 roams from a first sub-network to a second sub-network, the new network address (or alias/URL address) assigned to the wireless electronic device 20 at the second sub-network is updated in the table. The table permits routing of incoming telephone calls from the PSTN 102 to the wireless electronic devices 10, 20, 30, 40, as well as telephone calls from one wireless electronic device 10, 20, 30, 40 within the system 100 to another, either on the same sub-network or to another sub-network. The table may be forwarded to the firs node server 181 and the second node server 182 as well so that a local copy is accessible without having to cross the LAN backbone 110. The wireless electronic devices 10, 20, 30, 40 may also make calls out to the PSTN 102 by dialing a conventional telephone number in the normal fashion, and the wireless electronic devices 10, 20, 30, 40 communicate with the PBX system 120 to make such outgoing calls.

**TABLE 1**

| Telephone Address | Alias/URL Address | Network Address |
|---|---|---|
| | | |
| x3338 | joe.doe@toshiba.com | 111.222.333.4 |
| x3915 | jane.doe@toshiba.com | 111.222.333.8 |

The MCS server 140 preferably includes a simple network management protocol (SNMP) management system that performs user management, server management, node server management, call feature management, enterprise integration configuration, policy definition and enforcement, event monitoring, and general and specific reporting. SNMP agents may be preferably included with the first node server 181 and the second node server 182 to enable communication with the MCS server 140. The SNMP management system may be a Web-based system having a Web-based interface.

The MCS server 140, the first node server 181 the second-node server 182, and the wireless electronic devices 10, 20, 30, 40, may each include a Quality of Service (QOS) module. The Quality of Service Module may ensure that data users only use a specific bandwidth (of the first node server 181 or the second node server 182 to the access points 192, 193 to client device network 100), reserving the rest of the available bandwidth for voice users. In embodiments of the invention not utilizing QoS, a user could start a voice call with good voice quality but then this voice quality would rapidly degrade if another user opens a large e-mail attachment.

By utilizing a fast IP address assigning protocol such as DRCP, the roaming of a wireless electronic device 20 from one sub-network to another may be conducted seamlessly with a handoff time of approximately 50-100 milliseconds (ms), or less. Accordingly, the handoff time is so short that the disconnection from one sub-network and re-connection with another is unnoticeable by users carrying on a voice conversation, for example, with the wireless electronic device 10, 20, 30, 40. The wireless electronic device 10, 20, 30, 40 is preferably any electronic device having telephony features (i.e., a speaker and a microphone), and may be any suitable device, such as a PDA, a notebook PC, a tablet PC, a cellular or mobile telephone (e.g., an IEEE 802.11b "Wi-Fi" IP telephone (an H.323 telephone)), an Internet Protocol (IP)-based Wireless telephone handset, a portable computer, etc. Moreover, the wireless electronic device 10, 20, 30, 40 is preferably capable of simultaneous communication of both voice and data over the wireless connection, even while roaming from one sub-network to another.

Although the mobility communications system 100 illustrated in FIG. 1 shows a local area network (LAN) implementation, the system 100 may be implemented even more broadly on a global/wide area network (WAN) scale, such that each sub-network may constitute a radio cell much like cellular telephone networks (and may even utilizing existing cellular telephone network infrastructure), thus greatly expanding the wireless functionality of the wireless electronic devices 10, 20, 30, 40 to all corners of the world.

The wireless electronic devices 10, 20, 30, 40 may include advanced call features. Advanced call features may include call holding, transferring, forwarding, forwarding to voice mail, conference calling, etc. These are not typically associated with what non-telephone system devices can do, which is usually to just make and receive a call. Another advanced call feature is the ability to use internal four or five digit calling capability to receive or transmit calls within the business enterprise.

While the description above refers to particular embodiments of the present invention, it will be understood that may modifications may be made without departing from the scope of the appended claims.

## Claims

1. A mobility communications system, comprising:
a local area network (LAN) backbone (110);
a private branch exchange (PBX) system (120) in communication with a public switched telephone network (PSTN) (102);
a gateway (130) in communication with the PBX system (120) and the LAN backbone (110);
a mobility communications system (MCS) server (140) in communication with the LAN backbone (110);
a first sub-network (VLAN1), including
a first node server (181) in communication with the LAN backbone (110), and
at least one first access point (191, 193) in communication with the first node server (181);
a second sub-network (VLAN2), including
a second node server (182) in communication with the LAN backbone (110), and
at least one second access point (192, 194) in communication with the second node server (182); and
a wireless electronic device (10, 20) having a wireless connection with the at least one first access point (191,193) of the first sub-network (VLAN1) via a wireless protocol; wherein
the MCS server is configured to authenticate, account and authorise said wireless electronic device, said MCS server being further configured to relay information concerning authentication, accounting and authorisation of said electronic device to said node servers, such that when the wireless electronic device (10, 20) roams from the first sub-network (VLAN1) into the second sub-network (VLAN2), the wireless connection with the first access point (191, 193) is automatically disconnected and seamlessly reconnected with the at least one second access point (192, 194) of the second sub-network (VLAN2) such that re-authentication of the electronic device is performed by the MCS server or the node server or both of them.

2. The mobility communications system according to claim 1, wherein the gateway is adapted to provide real-time two-way communications between a PBX protocol of the PBX system and an Internet Protocol of the LAN backbone (110).

3. The mobility communications system according to claim 1, wherein the wireless electronic device (10, 20) is one of a personal digital assistant, a notebook computer, a tablet computer, a cellular telephone, an Internet Protocol-based wireless telephone handset, and a portable computer.

4. The mobility communications system according to claim 1, wherein the wireless electronic device (10, 20) is adapted to utilize Mobile Internet Protocol for data communication and Session Initiated Protocol-Mobile for voice communication.

5. The mobility communications system according to claim 1, wherein the wireless electronic device (10, 20) is adapted to simultaneously communicate wirelessly data and voice.

6. The mobility communications system according to claim 1, wherein the MCS server (140) is adapted to assign a network address to the wireless electronic device (10, 20) when the wireless electronic device is in the first sub-network (VLAN1), and the MCS server is adapted to assign a new network address to the wireless electronic device (10, 20) when the wireless electronic device roams from the first sub-network (VLAN1) to the second sub-network (VLAN2).

7. The mobility communications system according to claim 1, wherein the MCS server (140) is adapted to assign a network address to the wireless electronic device (10, 20) when the wireless electronic device (10, 20) is in the first sub-network (VLAN1); and the MCS server (140) is adapted to assign the network address to the wireless electronic device (10, 20) when the wireless electronic device (10, 20) roams from the first sub-network (VLAN1) to the second sub-network (VLAN2).

8. The mobility communications system according to claim wherein 1, the wireless electronic device (10, 20) has a telephone address and is assigned a corresponding network address.

9. The mobility communications system according to claim 8, wherein the network address is an alias address.

10. The mobility communications system according to claim 9, wherein the alias address is a uniform resource locator address.

11. The mobility communications system according to claim 8, wherein the network address is an Internet Protocol address.

12. The mobility communications system according to claim 8, wherein the telephone address is a PBX extension telephone number.

13. The mobility communication system according to claim 1, further comprising RADIUS and DIAMETER servers and wherein at least one of the RADIUS and DIAMETER servers (156) are utilized for secure communication while roaming.

14. The mobility communication system according to claim 1, wherein the MCS server (140) further includes simple network management protocol, SNMP, management system that is adapted to perform user management, server management, node server management, call feature management, enterprise integration configuration, policy definition and enforcement, event monitoring, and general and specific reporting.

15. The mobility communication system according to claim 14, wherein the SNMP management system has a web interface.

16. The mobility communication system according to claim 14, wherein the SNMP management system is adapted to be accessed from other SNMP-based tools.

17. The mobility communications system according to claim 1, wherein the MCS server (140), the first node server (181), the second node server (182), and the wireless communications device (10, 20) each include a Quality of Service, module adapted to ensure that data users utilize a specific bandwidth.

18. The mobility communications system according to claim 1, wherein the wireless communications device (10, 20) includes advanced call features, including call hold, transfer, forward, forward to voice mail, conference call, and intra-enterprise call receiving/transmitting.

19. The communication system according to claim 1, wherein the MCS server (140) includes a table of the network address of the wireless electronic device (10, 20) corresponding to the telephone address of the wireless electronic device (10, 20).

20. The mobility communications system of claim 19, wherein the wireless electronic device (10, 20) is assigned a new network address at the second sub-network (VLAN2).

21. The mobility communications system of claim 19, wherein the wireless electronic device (10, 20) is assigned the network address at the second sub-network (VLAN2).

22. The mobility communications system of claim 19, wherein the wireless connection with the at least one first access point (191, 193) is automatically disconnected and seamlessly re-connected with the at least one second access point (192, 194) of the second sub-network (VLAN2) based on variable business rules, including as signal strength, quality of service, and cost.

23. The mobility communications system according to claim 19, wherein the MCS server (140) is adapted to assign the network address to the wireless electronic device (10, 20) when the wireless electronic device is in the first sub-network (VLAN1), and the MCS server is adapted to assign (40) the new network address to the wireless electronic device (10, 20) when the wireless electronic device (10, 20) roams from the first sub-network (VLAN1) to the second sub-network (VLAN2).

24. The mobility communications system according to claim 19, wherein the network address is an alias address.

25. The mobility communications system according to claim 24, wherein the alias address is a uniform resource locator address.

26. The mobility communication system according to claim 19, wherein the network address is an Internet Protocol address.

27. The mobility communications system according to claim 19, wherein the wireless electronic device (10, 20) is selected from the group consisting of a personal digital assistant, a notebook computer, a table computer, a cellular telephone, an Internet Protocol-based wireless telephone handset, and a portable computer.

28. The mobility communications system according to claim 19, wherein the telephone address is a private branch exchange extension telephone number.

29. The mobility communications system according to claim 19, wherein the wireless electronic device (10, 20) is adapted to utilize Mobile Internet Protocol for data communication and Session Initiated Protocol-Mobile for voice communication.

30. The mobility communications system according to claim 19, wherein the wireless electronic device (10, 20) is adapted to utilize Mobile Internet Protocol for both data communications and for voice communications.

31. The mobility communications system according to claim 19, wherein the wireless electronic device (10, 20) is adapted to simultaneously communicate wirelessly data and voice.

32. A method of wireless communication, comprising:
establishing a wireless connection with at least one first access point (191, 193) via a wireless protocol in a first sub-network (VLAN1) by a wireless electronic device (10, 20);
authenticating, accounting and authorising a network address to the wireless electronic device (10, 20) having a telephone address using an MCS server;
relaying information concerning authentication, accounting and authorisation from said MCS server to a node server
roaming from the first sub-network (VLAN1) to a second sub-network (VLAN2);
disconnecting automatically the wireless connection with the at least one first access point (191, 193);
establishing seamlessly the wireless connection with at least one second access point (192, 194) in the second sub-network (VLAN2) by
assigning a new network address to the wireless electronic device (10, 20) at the second sub-network (VLAN2) and
re-authenticating the new network address assignment from the wireless electronic device (10, 20) to either said MCS server or said node server or both of them.

33. The method according to claim 32, further including updating a table having the network address of the wireless electronic device (10, 20) with the new network address corresponding to the telephone address of the wireless electronic device (10, 20).

34. The method according to claim 32, wherein the wireless electronic (10, 20) is selected from the group consisting of a personal digital assistant, a notebook computer, a table computer, a cellular telephone, an Internet Protocol-based wireless telephone handset, and a portable computer.

35. The method according to claim 32, further including utilizing Mobile Internet protocol for data communication and utilizing Session Initiated Protocol-Mobile for voice communication.

36. The method according to claim 32, wherein the telephone address is a private branch exchange extension telephone number.

37. The method according to claim 32, further including communicating simultaneously voice data and non-voice data over the wireless connection.

38. A program code storage device, comprising:
a machine-readable storage medium; and
machine-readable program code, stored on the machine-readable storage medium, having instructions to
establish a wireless connection with at least one first access point (191, 193) via a wireless protocol in a first sub-network (VLAN1);
receive a network address corresponding to a telephone address;
authenticate, account and authorise a network address to the wireless electronic device (10, 20) having a telephone address using an MCS server;
relay information concerning authentication, accounting and authorisation from said MCS server to a node server
disconnect automatically the wireless connection with the at least one first access point (191, 193) when a wireless electronic device (10, 20) roams from the first sub-network (VLAN1) to a second sub-network (VLAN2);
establish seamlessly the wireless connection with the at least one second access point (192, 194) in the second sub-network (VLAN2) by
receiving a new network address at the second sub-network (VLAN2) and
re-authenticating the new network address assignment to either said MCS server or said node server or both of them.

39. The program code storage device according to claim 38, wherein the machine-readable program code further includes instructions to update a table having the network address with the new network address corresponding to the telephone address.

40. The program code storage device according to claim 38, which is provided on the wireless electronic device (10, 20) selected from the group consisting of a personal digital assistant, a notebook computer, a table computer, a cellular telephone, an Internet Protocol-based wireless telephone handset, and a portable computer.

41. The program code storage device according to claim 38, wherein the machine-readable program code further includes instructions to utilize Mobile Internet Protocol for data communication and to utilize Session Initiated Protocol-Mobile for voice communication.

42. The program code storage device according to claim 38, which stores as the telephone address a private branch exchange extension telephone number.

43. The program code storage device according to claim 38, wherein the machine-readable program code further includes instructions to communicate simultaneously voice data and non-voice data over the wireless connection.

## Patentansprüche

1. Mobilitätskommunikationssystem, umfassend:
eine lokale Netzwerk-(LAN-)Grundstruktur (110);
ein Nebenstellenanlagen-(PBX-)System (120) in Kommunikation mit einem öffentlichen Fernsprechwählnetz (PSTN) (102);
einen Gateway (130) in Kommunikation mit dem PBX-System (120) und der LAN-Grundstruktur (110);
einen Mobilitätskommunikationssystem-(MCS-)Server (140) in Kommunikation mit der LAN-Grundstruktur (110);
ein erstes Teilnetz (VLAN1), aufweisend:
einen ersten Knotenserver (181) in Kommunikation mit der LAN-Grundstruktur (110), und
mindestens einen ersten Zugangspunkt (191, 193) in Kommunikation mit dem ersten Knotenserver (181);
ein zweites Teilnetz (VLAN2), aufweisend:
einen zweiten Knotenserver (182) in Kommunikation mit der LAN-Grundstruktur (110), und
mindestens einen zweiten Zugangspunkt (192, 194) in Kommunikation mit dem zweiten Knotenserver (182); und
eine drahtlose elektronische Vorrichtung (10, 20) mit einer drahtlosen Verbindung mit dem mindestens einem ersten Zugangspunkt (191, 193) des ersten Teilnetzes (VLAN1) über ein Funkprotokoll; wobei
der MCS-Server dafür konfiguriert ist, die drahtlose elektronische Vorrichtung zu authentifizieren, abzurechnen und zu autorisieren, wobei der MCS-Server dafür konfiguriert ist, Information bezüglich der Authentifizierung, Kontoführung und Autorisierung der elektronischen Vorrichtung an die Knotenserver weiterzugeben, so daß, wenn die drahtlose elektronische Vorrichtung (10, 20) sich bereichswechselnd aus dem ersten Teilnetz (VLAN1) in das zweite Teilnetz (VLAN2) bewegt, die drahtlose Verbindung mit dem ersten Zugangspunkt (191, 193) automatisch unterbrochen und nahtlos mit dem mindestens einem zweiten Zugangspunkt (192, 194) des zweiten Teilnetzes (VLAN2) wiederverbunden wird, so daß die erneute Authentifizierung der elektronischen Vorrichtung durch den MCS-Server oder den Knotenserver oder beide von ihnen durchgeführt wird.

2. Mobilitätskommunikationssystem nach Anspruch 1, wobei der Gateway dafür eingerichtet ist, eine Echtzeit-Zweirichtungskommunikation zwischen einem PBX-Protokoll des PBX-Systems und einem Internetprotokoll der LAN-Grundstruktur (110) bereitzustellen.

3. Mobilitätskommunikationssystem nach Anspruch 1, wobei die drahtlose elektronische Vorrichtung (10, 20) eines von folgendem ist: ein persönlicher digitaler Assistent, ein Notebook-Computer, ein Tablett-Computer, ein Mobiltelefon, ein auf dem Internetprotokoll beruhender drahtloser Telefon-Handapparat und ein tragbarer Computer.

4. Mobilitätskommunikationssystem nach Anspruch 1, wobei die drahtlose elektronische Vorrichtung (10, 20) dafür eingerichtet ist, das Mobile Internetprotokoll für Datenkommunikation und das Session Initiated Protocol-Mobile für Sprachkommunikation zu nutzen.

5. Mobilitätskommunikationssystem nach Anspruch 1, wobei die drahtlose elektronische Vorrichtung (10, 20) dafür eingerichtet ist, gleichzeitig Daten und Sprache drahtlos zu übermitteln.

6. Mobilitätskommunikationssystem nach Anspruch 1, wobei der MCS-Server (140) dafür eingerichtet ist, der drahtlosen elektronischen Vorrichtung (10, 20) eine Netzwerkadresse zuzuweisen, wenn sich die drahtlose elektronische Vorrichtung im ersten Teilnetz (VLAN1) befindet, und der MCS-Server (140) dafür eingerichtet ist, der drahtlosen elektronischen Vorrichtung (10, 20) eine neue Netzwerkadresse zuzuweisen, wenn die drahtlose elektronische Vorrichtung sich bereichswechselnd aus dem ersten Teilnetz (VLAN1) in das zweite Teilnetz (VLAN2) bewegt.

7. Mobilitätskommunikationssystem nach Anspruch 1, wobei der MCS-Server (140) dafür eingerichtet ist, der drahtlosen elektronischen Vorrichtung (10, 20) eine Netzwerkadresse zuzuweisen, wenn sich die drahtlose elektronische Vorrichtung im ersten Teilnetz (VLAN1) befindet, und der MCS-Server (140) dafür eingerichtet ist, der drahtlosen elektronischen Vorrichtung (10, 20) die Netzwerkadresse zuzuweisen, wenn die drahtlose elektronische Vorrichtung (10, 20) sich bereichswechselnd aus dem ersten Teilnetz (VLAN1) in das zweite Teilnetz (VLAN2) bewegt.

8. Mobilitätskommunikationssystem nach Anspruch 1, wobei die drahtlose elektronische Vorrichtung (10, 20) eine Telefonadresse hat und ihr eine entsprechende Netzwerkadresse zugewiesen wird.

9. Mobilitätskommunikationssystem nach Anspruch 8, wobei die Netzwerkadresse eine Alias-Adresse ist.

10. Mobilitätskommunikationssystem nach Anspruch 9, wobei die Alias-Adresse eine Uniform-Resource-Locator-Adresse ist.

11. Mobilitätskommunikationssystem nach Anspruch 8, wobei die Netzwerkadresse eine Internetprotokoll-Adresse ist.

12. Mobilitätskommunikationssystem nach Anspruch 8, wobei die Telefonadresse eine Telefonnummer eines PBX-Nebenstellenapparats ist.

13. Mobilitätskommunikationssystem nach Anspruch 1, ferner RADIUS- und DIAMETER-Server aufweisend, und wobei mindestens einer der RADIUS- und DIAMETER-Server (156) zur sicheren Kommunikation während eines Bereichswechsels genutzt wird.

14. Mobilitätskommunikationssystem nach Anspruch 1, wobei der MCS-Server (140) ferner ein einfaches Netzwerkverwaltungsprotokoll-, SNMP-Verwaltungssystem aufweist, das dafür eingerichtet ist, die Nutzerverwaltung, Serververwaltung, Knotenserververwaltung, Anrufmerkmalverwaltung, Unternehmensintegrationskonfiguration, Richtliniendefmition und -durchsetzung, Ereignisüberwachung und allgemeine und spezifische Berichterstattung durchzuführen.

15. Mobilitätskommunikationssystem nach Anspruch 14, wobei das SNMP-Verwaltungssystem eine Web-Schnittstelle hat.

16. Mobilitätskommunikationssystem nach Anspruch 14, wobei das SNMP-Verwaltungssystem dafür eingerichtet ist, daß von anderen SNMP-gestützten Werkzeugen Zugang erfolgen kann.

17. Mobilitätskommunikationssystem nach Anspruch 1, wobei der MCS-Server (140), der erste Knotenserver (181), der zweite Knotenserver (182) und die drahtlose Kommunikationsvorrichtung (10, 20) jeweils ein Dienstgütemodul aufweisen, das dafür eingerichtet ist, sicherzustellen, daß Datennutzer eine spezifische Bandbreite nutzen.

18. Mobilitätskommunikationssystem nach Anspruch 1, wobei die drahtlose Kommunikationsvorrichtung (10, 20) moderne Anrufmerkmale aufweist, einschließlich Anruf-Halten,
- Weiterschaltung, -Umleitung, -Umleitung zur Sprachbox, Konferenzschaltung und Empfangen/Senden von Anrufen innerhalb eines Unternehmens.

19. Mobilitätskommunikationssystem nach Anspruch 1, wobei der MCS-Server (140) eine Tabelle der Netzwerkadresse der drahtlosen elektronischen Vorrichtung (10, 20), die der Telefonadresse der drahtlosen elektronischen Vorrichtung (10, 20) entspricht, aufweist.

20. Mobilitätskommunikationssystem nach Anspruch 19, wobei der drahtlosen elektronischen Vorrichtung (10, 20) im zweiten Teilnetz (VLAN2) eine neue Netzwerkadresse zugewiesen wird.

21. Mobilitätskommunikationssystem nach Anspruch 19, wobei der drahtlosen elektronischen Vorrichtung (10, 20) im zweiten Teilnetz (VLAN2) die Netzwerkadresse zugewiesen wird.

22. Mobilitätskommunikationssystem nach Anspruch 19, wobei die drahtlose Verbindung mit dem mindestens einen ersten Zugangspunkt (191, 193) auf der Grundlage veränderlicher Geschäftsregeln, einschließlich etwa der Signalstärke, Dienstgüte und Kosten, automatisch unterbrochen und nahtlos mit dem mindestens einen zweiten Zugangspunkt (192, 194) des zweiten Teilnetzes (VLAN2) wiederverbunden wird.

23. Mobilitätskommunikationssystem nach Anspruch 19, wobei der MCS-Server (140) dafür eingerichtet ist, der drahtlosen elektronischen Vorrichtung (10, 20) die Netzwerkadresse zuzuweisen, wenn sich die drahtlose elektronische Vorrichtung im ersten Teilnetz (VLAN1) befindet, und der MCS-Server dafür eingerichtet ist, der drahtlosen elektronischen Vorrichtung (10, 20) die neue Netzwerkadresse zuzuweisen (40), wenn die drahtlose elektronische Vorrichtung (10, 20) sich bereichswechselnd aus dem ersten Teilnetz (VLAN1) in das zweite Teilnetz (VLAN2) bewegt.

24. Mobilitätskommunikationssystem nach Anspruch 19, wobei die Netzwerkadresse eine Alias-Adresse ist.

25. Mobilitätskommunikationssystem nach Anspruch 24, wobei die Alias-Adresse eine Uniform-Resource-Locator-Adresse ist.

26. Mobilitätskommunikationssystem nach Anspruch 19, wobei die Netzwerkadresse eine Internetprotokoll-Adresse ist.

27. Mobilitätskommunikationssystem nach Anspruch 19, wobei die drahtlose elektronische Vorrichtung (10, 20) aus der Gruppe ausgewählt ist, die aus folgendem besteht: ein persönlicher digitaler Assistent, ein Notebook-Computer, ein Tischcomputer ein Mobiltelefon, ein auf dem Internetprotokoll beruhender drahtloser Telefon-Handapparat und ein tragbarer Computer.

28. Mobilitätskommunikationssystem nach Anspruch 19, wobei die Telefonadresse eine Telefonnummer eines Nebenstellenapparats einer Nebenstellenanlage ist.

29. Mobilitätskommunikationssystem nach Anspruch 19, wobei die drahtlose elektronische Vorrichtung (10, 20) dafür eingerichtet ist, das Mobile Internetprotokoll für Datenkommunikation und das Session Initiated Protocol-Mobile für Sprachkommunikation zu nutzen.

30. Mobilitätskommunikationssystem nach Anspruch 19, wobei die drahtlose elektronische Vorrichtung (10, 20) dafür eingerichtet ist, das Mobile Internetprotokoll sowohl für die Datenkommunikation als auch für die Sprachkommunikation zu nutzen.

31. Mobilitätskommunikationssystem nach Anspruch 19, wobei die drahtlose elektronische Vorrichtung (10, 20) dafür eingerichtet ist, gleichzeitig Daten und Sprache drahtlos zu übermitteln.

32. Verfahren zur drahtlosen Kommunikation, die folgenden Schritte umfassend:
Aufbauen einer drahtlosen Verbindung mit mindestens einem ersten Zugangspunkt (191, 193) über ein Funkprotokoll in einem ersten Teilnetz (VLAN1) durch eine drahtlose elektronische Vorrichtung (10, 20);
Authentifizieren, Kontoführen und Autorisieren einer Netzwerkadresse bei der drahtlosen elektronischen Vorrichtung (10, 20) mit einer Telefonadresse unter Verwendung eines MCS-Servers;
Weitergeben von Information bezüglich der Authentifizierung, Kontoführung und Autorisierung vom MCS-Server an einen Knotenserver;
bereichswechselndes Bewegen vom ersten Teilnetz (VLAN1) in ein zweites Teilnetz (VLAN2);
automatisches Trennen der drahtlosen Verbindung mit dem mindestens einem ersten Zugangspunkt (191, 193);
nahtloses Aufbauen der drahtlosen Verbindung mit mindestens einem zweiten Zugangspunkt (192, 194) im zweiten Teilnetz (VLAN2) durch
Zuweisen einer neuen Netzwerkadresse an die drahtlose elektronische Vorrichtung (10, 20) im zweiten Teilnetz (VLAN2) und
erneutes Authentifizieren der neuen Netzwerkadressenzuweisung von der drahtlosen elektronischen Vorrichtung (10, 20) entweder bei dem MCS-Server oder dem Knotenserver oder bei beiden von ihnen.

33. Verfahren nach Anspruch 32, ferner die folgenden Schritte aufweisend: Aktualisieren einer Tabelle, welche die Netzwerkadresse der drahtlosen elektronischen Vorrichtung (10, 20) aufweist, mit der neuen Netzwerkadresse, die der Telefonadresse der drahtlosen elektronischen Vorrichtung (10, 20) entspricht.

34. Verfahren nach Anspruch 32, wobei die drahtlose elektronische Vorrichtung (10, 20) aus der Gruppe ausgewählt ist, die aus folgendem besteht: ein persönlicher digitaler Assistent, ein Notebook-Computer, ein Tischcomputer, ein Mobiltelefon, ein auf dem Internetprotokoll beruhender drahtloser Telefon-Handapparat und ein tragbarer Computer.

35. Verfahren nach Anspruch 32, ferner die folgenden Schritte aufweisend: Nutzen des Mobilen Intemetprotokolls für Datenkommunikation und Nutzen des Session Initiated Protocol-Mobile für Sprachkommunikation.

36. Verfahren nach Anspruch 32, wobei die Telefonadresse eine Telefonnummer eines Nebenstellenapparats einer Nebenstellenanlage ist.

37. Verfahren nach Anspruch 32, ferner den folgenden Schritt aufweisend: gleichzeitiges Übermitteln von Sprachdaten und Nicht-Sprachdaten über die drahtlose Verbindung.

38. Programmcode-Speichervorrichtung, umfassend:
ein maschinenlesbares Speichermedium; und
maschinenlesbaren Programmcode, der auf dem maschinenlesbaren Speichermedium gespeichert ist, mit Anweisungen zum:
Aufbauen einer drahtlosen Verbindung mit mindestens einem ersten Zugangspunkt (191, 193) über ein drahtloses Protokoll in einem ersten Teilnetz (VLAN1);
Empfangen einer Netzwerkadresse, die einer Telefonadresse entspricht;
Authentifizieren, Kontoführen und Autorisieren einer Netzwerkadresse bei der drahtlosen elektronischen Vorrichtung (10, 20) mit einer Telefonadresse unter Verwendung eines MCS-Servers;
Weitergeben von Information bezüglich der Authentifizierung, Kontoführung und Autorisierung vom MCS-Server an einen Knotenserver;
automatisches Trennen der drahtlosen Verbindung mit dem mindestens einem ersten Zugangspunkt (191, 193), wenn eine drahtlose elektronische Vorrichtung (10, 20) sich bereichswechseld aus dem ersten Teilnetz (VLAN1) in ein zweites Teilnetz (VLAN2) bewegt;
nahtloses Aufbauen der drahtlosen Verbindung mit dem mindestens einem zweiten Zugangspunkt (192, 194) im zweiten Teilnetz (VLAN2) durch
Empfangen einer neuen Netzwerkadresse im zweiten Teilnetz (VLAN2) und
erneutes Authentifizieren der neuen Netzwerkadressenzuweisung entweder bei dem MCS-Server oder dem Knotenserver oder bei beiden von ihnen.

39. Programmcode-Speichervorrichtung nach Anspruch 38, wobei der maschinenlesbare Programmcode ferner Anweisungen zur Aktualisierung einer Tabelle, welche die Netzwerkadresse aufweist, mit der neuen Netzwerkadresse, die der Telefonadresse entspricht, aufweist.

40. Programmcode-Speichervorrichtung nach Anspruch 38, die in der drahtlosen elektronischen Vorrichtung (10, 20) vorgesehen ist, welche aus der Gruppe ausgewählt ist, die aus folgendem besteht: ein persönlicher digitaler Assistent, ein Notebook-Computer, ein Tischcomputer, ein Mobiltelefon, ein auf dem Internetprotokoll beruhender drahtloser Telefon-Handapparat und ein tragbarer Computer.

41. Programmcode-Speichervorrichtung nach Anspruch 38, wobei der maschinenlesbare Programmcode ferner Anweisungen zur Nutzung des Mobilen Internetprotokolls für Datenkommunikation und zur Nutzung des Session Initiated Protocol-Mobile für Sprachkommunikation aufweist.

42. Programmcode-Speichervorrichtung nach Anspruch 38, die als die Telefonadresse eine Telefonnummer eines Nebenstellenapparats einer Nebenstellenanlage speichert.

43. Programmcode-Speichervorrichtung nach Anspruch 38, wobei der maschinenlesbare Programmcode ferner Anweisungen zur gleichzeitigen Übermittlung von Sprachdaten und Nicht-Sprachdaten über die drahtlose Verbindung aufweist.

## Revendications

1. Système mobile de communication, comprenant:
une artère de réseau local (LAN) (110);
un système d'autocommutateur privé (PBX) (120) en communication avec un réseau téléphonique public commuté (PSTN) (102);
une passerelle (130) en communication avec le système PBX (120) et l'artère LAN (110);
un serveur de système mobile de communication (MCS) (140) en communication avec l'artère LAN (110);
un premier sous-réseau (VLAN1), comprenant:
un premier serveur de noeud (181) en communication avec l'artère LAN (110), et
au moins un premier point d'accès (191, 193) en communication avec le premier serveur de noeud (181);
un second sous-réseau (VLAN2), comprenant:
un second serveur de noeud (182) en communication avec l'artère LAN (110), et
au moins un second point d'accès (192, 194) en communication avec le second serveur de noeud (182); et
un dispositif électronique sans fil (10, 20) ayant une connexion sans fil avec le au moins un premier point d'accès (191, 193) du premier sous-réseau (VLAN1) via un protocole sans fil; dans lequel
le serveur MCS est configuré pour authentifier, tenir des comptes et autoriser ledit dispositif électronique sans fil, ledit serveur MCS étant en outre configuré pour relayer des informations concernant l'authentification, l'enregistrement et l'autorisation dudit dispositif électronique auxdits serveurs de noeud, pour que lorsque le dispositif électronique sans fil (10, 20) se déplace à partir du premier sous-réseau (VLAN1) dans le second sous-réseau VLAN2), la connexion sans fil avec le premier point d'accès (191, 193) soit automatiquement déconnectée et reconnectée sans interruption intempestive avec le au moins un second point d'accès (192, 194) du second sous-réseau (VLAN2) pour qu'une ré-authentification du dispositif électronique soit réalisée par le serveur MCS ou le serveur de noeud ou les deux.

2. Système mobile de communication selon la revendication 1, dans lequel la passerelle est adaptée pour fournir des communications bidirectionnelles en temps réel entre un protocole PBX du système PBX et un protocole Internet de l'artère LAN (110).

3. Système mobile de communication selon la revendication 1, dans lequel le dispositif électronique sans fil (10, 20) est un assistant numérique personnel, un ordinateur bloc-notes, un ordinateur de table, un téléphone cellulaire, un combiné téléphonique sans fil à base de protocole Internet, ou un ordinateur portable.

4. Système mobile de communication selon la revendication 1, dans lequel le dispositif électronique sans fil (10, 20) est adapté pour utiliser un protocole Internet mobile pour une communication de données et une session initialisée par un protocole de mobile (SIP) pour une communication vocale.

5. Système mobile de communication selon la revendication 1, dans lequel le dispositif électronique sans fil (10, 20) est adapté pour communiquer simultanément des données et de la voix de façon sans fil.

6. Système mobile de communication selon la revendication 1, dans lequel le serveur MCS (140) est adapté pour assigner une adresse de réseau au dispositif électronique sans fil (10, 20) lorsque le dispositif électronique sans fil est dans le premier sous-réseau (VLAN1) et le serveur MCS est adapté pour assigner une nouvelle adresse de réseau au dispositif électronique sans fil (10, 20) lorsque le dispositif électronique sans fil se déplace à partir du premier sous-réseau (VLAN1) au second sous-réseau (VLAN2).

7. Système mobile de communication selon la revendication 1, dans lequel le serveur MCS (140) est adapté pour assigner une adresse de réseau au dispositif électronique sans fil (10, 20) lorsque le dispositif électronique sans fil (10, 20) est dans le premier sous-réseau (VLAN1); et le serveur MCS (140) est adapté pour assigner l'adresse de réseau au dispositif électronique sans fil (10, 20) lorsque le dispositif électronique sans fil (10, 20) se déplace à partir du premier sous-réseau (VLAN1) au second sous-réseau (VLAN2).

8. Système mobile de communication selon la revendication 1, dans lequel le dispositif électronique sans fil (10, 20) a une adresse téléphonique et une adresse de réseau correspondante lui est assignée.

9. Système mobile de communication selon la revendication 8, dans lequel l'adresse de réseau est une adresse d'alias.

10. Système mobile de communication selon la revendication 9, dans lequel l'adresse d'alias est une adresse URL (localisation de ressource uniforme).

11. Système mobile de communication selon la revendication 8, dans lequel l'adresse de réseau est une adresse de protocole Internet.

12. Système mobile de communication selon la revendication 8, dans lequel l'adresse téléphonique est un numéro de téléphone de poste PBX.

13. Système mobile de communication selon la revendication 1, comprenant en outre des serveurs RADIUS et DIAMETER et dans lequel au moins un des serveurs RADIUS et DIAMETER (156) est utilisé pour sécuriser une communication durant le roaming.

14. Système mobile de communication selon la revendication 1, dans lequel le serveur MCS (140) comprend en outre un protocole de gestion de réseau simple, SNMP, un système de gestion qui est adapté pour réaliser une gestion d'utilisateur, une gestion de serveur, une gestion de serveur de noeud, une gestion de caractéristique d'appel, une configuration d'intégration d'entreprise, une définition de politique et une mise en application, une surveillance d'événement et un reporting général et spécifique.

15. Système mobile de communication selon la revendication 14, dans lequel le système de gestion SNMP a une interface web.

16. Système mobile de communication selon la revendication 14, dans lequel le système de gestion SNMP est adapté pour être accédé à partir d'autres outils à base de SNMP.

17. Système mobile de communication selon la revendication 1, dans lequel le serveur MCS (140), le premier serveur de noeud (181), le second serveur de noeud (182), et le dispositif de communication sans fil (10, 20) comprennent chacun une qualité de service, un module adapté pour assurer que les données d'utilisateur utilisent une bande passante spécifique.

18. Système mobile de communication selon la revendication 1, dans lequel le dispositif de communication sans fil (10, 20) comprend des caractéristiques d'appel avancées, y compris la mise en attente d'appel, le transfert, le renvoi, le renvoi à une boîte vocale, l'appel en conférence, la réception/l'émission d'appel intra-entreprise.

19. Système de communication selon la revendication 1, dans lequel le serveur MCS (140) comprend une table de l'adresse de réseau du dispositif électronique sans fil (10, 20) correspondant à l'adresse téléphonique du dispositif électronique sans fil (10, 20).

20. Système mobile de communication selon la revendication 19, dans lequel au dispositif électronique sans fil (10, 20) est assigné une nouvelle adresse de réseau sur le second sous-réseau (VLAN2).

21. Système mobile de communication selon la revendication 19, dans lequel au dispositif électronique sans fil (10, 20) est assigné une adresse de réseau sur le second sous-réseau (VLAN2).

22. Système mobile de communication selon la revendication 19, dans lequel la connexion sans fil avec le au moins un premier point d'accès (191, 193) est automatiquement déconnectée et reconnectée sans interruption intempestive avec le au moins un second point d'accès (192, 194) du second sous-réseau (VLAN2) sur la base des règles de business variables, comme une puissance de signal, une qualité de service et un coût.

23. Système mobile de communication selon la revendication 19, dans lequel le serveur MCS (140) est adapté pour assigner l'adresse de réseau au dispositif électronique sans fil (10, 20) lorsque le dispositif électronique sans fil est dans le premier sous-réseau (VLAN1), et le serveur MCS est adapté pour assigner (40) la nouvelle adresse de réseau au dispositif électronique sans fil (10, 20) lorsque le dispositif électronique sans fil (10, 20) se déplace à partir du premier sous-réseau (VLAN1) au second sous-réseau (VLAN2).

24. Système mobile de communication selon la revendication 19, dans lequel l'adresse de réseau est une adresse d'alias.

25. Système mobile de communication selon la revendication 24, dans lequel l'adresse d'alias est une adresse URL (localisation de ressource uniforme).

26. Système mobile de communication selon la revendication 19, dans lequel l'adresse de réseau est une adresse de protocole Internet.

27. Système mobile de communication selon la revendication 19, dans lequel le dispositif électronique sans fil (10, 20) est sélectionné à partir du groupe se composant d'un assistant numérique personnel, d'un ordinateur bloc-notes, d'un ordinateur de table, d'un téléphone cellulaire, d'un combiné téléphonique sans fil à base de protocole Internet, et un ordinateur portable.

28. Système mobile de communication selon la revendication 19, dans lequel l'adresse téléphonique est un numéro de téléphone de poste d'autocommutateur privé.

29. Système mobile de communication selon la revendication 19, dans lequel le dispositif électronique sans fil (10, 20) est adapté pour utiliser un protocole Internet mobile pour une communication de données et une session initialisée par un protocole de mobile pour une communication vocale.

30. Système mobile de communication selon la revendication 19, dans lequel le dispositif électronique sans fil (10, 20) est adapté pour utiliser un protocole Internet mobile pour à la fois des communications de données et des communications vocales.

31. Système mobile de communication selon la revendication 19, dans lequel le dispositif électronique sans fil (10, 20) est adapté pour communiquer simultanément des données et de la voix de façon sans fil.

32. Procédé de communication sans fil, comprenant:
l'établissement d'une connexion sans fil avec au moins un premier point d'accès (191, 193) via un protocole sans fil dans un premier sous-réseau (VLAN1) par un dispositif électronique sans fil (10, 20);
l'authentification, l'enregistrement et l'autorisation d'une adresse de réseau pour le dispositif électronique sans fil (10, 20) ayant une adresse téléphonique utilisant un serveur MCS;
le relayage d'informations concernant l'authentification, l'enregistrement et l'autorisation à partir dudit serveur MCS à un serveur de noeud;
l'itinérance à partir du premier sous-réseau (VLAN1) à un second sous-réseau (VLAN2);
la déconnexion automatiquement de la connexion sans fil avec le au moins un premier point d'accès (191, 193);
l'établissement sans interruption intempestive de la connexion sans fil avec au moins un second point d'accès (192, 194) dans le second sous-réseau (VLAN2) par
l'assignation d'une nouvelle adresse de réseau au dispositif électronique sans fil (10, 20) sur le second sous-réseau (VLAN2) et
la ré-authentification de la nouvelle assignation d'adresse de réseau à partir du dispositif électronique sans fil (10, 20) soit au serveur MCS soit audit serveur de noeud soit les deux.

33. Procédé selon la revendication 32, comprenant en outre la mise à jour d'une table ayant l'adresse de réseau du dispositif électronique sans fil (10, 20) avec la nouvelle adresse de réseau correspondant à l'adresse téléphonique du dispositif électronique sans fil (10, 20).

34. Procédé selon la revendication 32, dans lequel le dispositif électronique sans fil (10, 20) est sélectionné à partir du groupe se composant d'un assistant numérique personnel, d'un ordinateur bloc-notes, d'un ordinateur de table, d'un téléphone cellulaire, d'un combiné téléphonique sans fil à base de protocole Internet et d'un ordinateur portable.

35. Procédé selon la revendication 32, comprenant en outre l'utilisation d'un protocole Internet mobile pour une communication de données et l'utilisation d'une session initialisée par un protocole de mobile pour une communication vocale.

36. Procédé selon la revendication 32, dans lequel l'adresse téléphonique est un numéro de téléphone de poste d'autocommutateur privé.

37. Procédé selon la revendication 32, comprenant en outre la communication simultanément de données vocales et de données non vocales sur la connexion sans fil.

38. Dispositif de stockage de code de programme, comprenant:
un support de stockage lisible par machine; et
un code de programme lisible par machine, stocké sur le support de stockage lisible par machine, ayant des instructions pour
établir une connexion sans fil avec au moins un premier point d'accès (191, 193) via un protocole sans fil dans un premier sous-réseau (VLAN1);
recevoir une adresse de réseau correspondant à une adresse téléphonique;
authentifier, tenir des comptes et autoriser une adresse de réseau pour le dispositif électronique sans fil (10, 20) ayant une adresse téléphonique utilisant un serveur MCS;
relayer des informations concernant l'authentification, l'enregistrement et l'autorisation à partir dudit serveur MCS à un serveur de noeud;
déconnecter automatiquement la connexion sans fil avec le au moins un premier point d'accès (191, 193) lorsqu'un dispositif électronique sans fil (10, 20) se déplace à partir du premier sous-réseau (VAN1) à un second sous-réseau (VLAN2);
établir sans interruption intempestive la connexion sans fil avec le au moins un second point d'accès (192, 194) dans le second sous-réseau (VLAN2) par
la réception d'une nouvelle adresse de réseau sur le second sous-réseau (VLAN2) et
la ré-authentification de la nouvelle assignation d'adresse de réseau soit audit serveur MCS soit audit serveur de noeud soit aux deux.

39. Dispositif de stockage de code de programme selon la revendication 38, dans lequel le code de programme lisible par machine comprend en outre des instructions pour mettre à jour une table ayant l'adresse de réseau avec la nouvelle adresse de réseau correspondant à l'adresse téléphonique.

40. Dispositif de stockage de code de programme selon la revendication 38, qui est fourni sur le dispositif électronique sans fil (10, 20) sélectionné à partir du groupe se composant d'un assistant numérique personnel, d'un ordinateur bloc-notes, d'un ordinateur de table, d'un téléphone cellulaire, d'un combiné téléphonique sans fil à base de protocole Internet et d'un ordinateur portable.

41. Dispositif de stockage de code de programme selon la revendication 38, dans lequel le code de programme lisible par machine comprend en outre des instructions pour utiliser un protocole Internet mobile pour une communication de données et utiliser une session initialisée par un protocole de mobile pour une communication vocale.

42. Dispositif de stockage de code de programme selon la revendication 38, qui stocke comme adresse téléphonique un numéro de téléphone de poste d'autocommutateur privé.

43. Dispositif de stockage de code de programme selon la revendication 38, dans lequel le code de programme lisible par machine comprend en outre des instructions pour communiquer simultanément des données vocales et des données non vocales sur la connexion sans fil.
